# EUROPÄISCHE PATENTANMELDUNG

(11) **EP 4 769 979 A1**
(43) Veröffentlichungstag der Anmeldung: **01.07.2026**
(21) Anmeldenummer: 24223630.5
(22) Anmeldetag: 30.12.2024
(51) Int. Cl.: H04B 10/90, H04B 13/02

(54) **NEUTRINO-BASIERTE INTERKONTINENTALE NETZWERKVERBINDUNG**

(71) Anmelder: Deutsche Telekom AG, 53113 Bonn (DE)
(72) Erfinder: GEITZ, Marc, 58089 Hagen (DE)
(74) Vertreter: karo IP

(57) **Zusammenfassung**

Verfahren zum Austausch einer Nachricht zwischen einem Sender und einem Empfänger unter Verwendung eines Neutrino-basierten Kommunikationskanals, umfassend die Schritte:
senderseitiges Kodieren der Nachricht in ein Codewort mittels deterministischer oder stochastischer Post-Shannon-Kodierung (PSK),
senderseitige Erzeugung eines Neutrino-Strahls durch:
- Beschleunigen von Protonen in einem Protonenstrahl,
- Auslenkung des Protonenstrahls auf ein Target zur Erzeugung von Neutrinos durch den Zerfall kurzlebiger Teilchen;

senderseitige Amplitudenmodulation des Neutrino-Strahls durch:
- Steuerung der Auslenkung des Protonenstrahls mittels eines steuerbaren Ablenksystems, um entsprechend der Bits der PSK kodierten Nachricht den Protonenstrahl entweder auf das Target oder auf einen Absorber zu lenken, wodurch die PSK kodierte Nachricht als Neutrino-Pulse kodiert werden, wobei gilt:
∘ das Ausbleiben eines Neutrino-Pulses in einem Zeitschlitz repräsentiert ein "0"-Bit und
∘ das Aussenden eines Neutrino-Pulses in einem Zeitschlitz repräsentiert ein "1"-Bit oder umgekehrt,

Übertragen der Neutrino-Pulse vom Sender zum Empfänger;
Synchronisieren von Sender und Empfänger mittels einer Zeitsynchronisationseinheit, die die Taktung der erzeugten Neutrino-Pulse mit Zeitfenstern des Empfängersystems synchronisiert;
Empfangen der Neutrino-Pulse durch einen Neutrino-Detektor des Empfängers, wobei:
- Zerfallsprodukte, insbesondere Lichtsignale, die bei der Wechselwirkung der Neutrinos mit einem Detektormedium erzeugt werden, detektiert werden und
- die detektierten Signale als Bitfolge gespeichert werden;

Dekodieren der empfangenen Bitfolge, wobei ein Vergleich zwischen dem erwarteten und dem empfangenen Codewort durchgeführt wird, um eine Identifikation der Nachricht zu ermöglichen.

## Beschreibung

Die Erfindung betrifft ein Verfahren und ein System zum Austausch einer Nachricht in Form eines Codewortes zwischen einem Sender und einem Empfänger unter Verwendung eines Neutrino-basierten Kommunikationskanals.

Neutrinos sind subatomare Teilchen mit verschwindend geringer Masse und interagieren mit Materie ausschließlich über die schwache Wechselwirkung. Das bedeutet, dass sie nahezu ohne jegliche Wechselwirkung durch große Volumina von Materie hindurchtreten können. Die Erde ist nahezu "durchsichtig" für Neutrinos.

Auch wenn es einige Reaktionen, wie "Electron Capture", "Beta⁺ Zerfall" und "Elektron-Positron Annihilation", gibt, bei denen Neutrinos entstehen, so erfolgt die gezielte Erzeugung von Neutrinos über Kernprozesse, bei denen insbesondere Protonen in einem Beschleuniger auf hohe Energien von vielen GeV (1 GeV bis 450 GeV) gebracht und auf ein Target aus festem Material, wie Graphit, gelenkt werden. Bei der Kollision der hochenergetischen Protonen mit Atomkernen entstehen instabile Teilchen wie Pionen (π⁺ und π⁻) oder Kaonen (K⁺ und K⁻), die innerhalb von Nanosekunden in Myon-Neutrinos und Antimyonen zerfallen. Die geladenen Pionen können zunächst mithilfe magnetischer Fokussiereinrichtungen kanalisiert und ausgerichtet werden, so dass sich die nach ihrem Zerfall entstehenden Neutrinos entlang der Richtung des Zerfallsprozesses ausbreiten. Auf diese Art kann ein ausgerichteter Neutrino-Strahl erzeugt werden, der anschließend durch Materie in Richtung eines Detektorsystems propagiert.

Einige der derzeit existierenden Institutionen haben Anlagen, bei deren Betrieb Neutrinos entstehen. Zu nennen sind beispielsweise das Fermilab in den USA (Protonenstrahlen von 30-120 GeV), das CERN in Genf, Europa (Protonenstrahlen von 50-450 GeV) oder das J-PARC in Japan (Protonenstrahlen von 30 GeV).

Wegen des besonders kleinen Wirkungsquerschnittes stellt die Detektion von Neutrinos eine große Herausforderung dar. Bekannte Neutrino-Detektoren nutzen Schwerwassertanks, die in unterirdischen Kavernen installiert sind, arktisches Eis, wie es im IceCube-Experiment genutzt wird, das Eis und das Wasser des Baikal-Sees oder Aluminium-Blei-Schichten, wie sie im MINOS-Experiment verwendet werden. Mit diesen Detektoren werden Zerfallsprodukte respektive Sekundärpartikel, wie geladene Teilchen oder Photonen, insbesondere Lichtsignale der Cherenkov-Strahlung, erfasst. Cherenkov-Strahlung entsteht, wenn elektrisch geladene Teilchen als Reaktionsprodukte einer Neutrino-Interaktion sich schneller als die Lichtgeschwindigkeit in dem jeweiligen Medium bewegen. Diese Lichtsignale werden mit Szintillatoren oder ähnlichen photonensensitiven Detektoren aufgenommen und ermöglichen so die Analyse von Neutrino-Interaktionen. Aufgrund der Richtungsabhängigkeit des Lichts entlang des Cherenkov-Kegels lässt sich sogar die Richtung, aus der das ursprüngliche Neutrino stammt, rekonstruieren.

Am Fermilab werden typischerweise 10¹³ Neutrinos mit einer Energie bis 30GeV pro Puls erzeugt. Der MINOS Detektor, der 760 km entfernt in einer Kaverne in Minnesota verbaut ist, misst davon etwa 5 - 6 Reaktionen pro Puls über den Nachweis von Myonen. Die Repetitionsrate der Pulse hängt von der Repetitionsrate des den Protonenstrahl erzeugenden Beschleunigers ab und beträgt derzeit typischerweise 50Hz.

Bekanntermaßen hängt die Latenz eines Kommunikationsnetzes, mithin die Dauer, die ein Datenpaket benötigt, um von einem Anfangs- zu einem Endknoten zu gelangen, vor allem von der Länge der Übertagungsstrecke, aber auch von der Topologie des Netzwerks ab. Während kontinentale Netzwerkverbindungen in Europa Latenzen von typischerweise 30ms aufweisen, kann ein Pakettransfer von Deutschland in die USA, nach China oder Australien zwischen 100ms und 400ms dauern. Für das Internet lassen sich die Latenzen automatisch bestimmen. So wurden folgende Übertragungszeiten für ein IP-Paket gemessen: Von Frankfurt/M nach Graz 37ms, von Frankfurt/M nach New York gut 100ms, von Frankfurt/M nach Hongkong 339ms und von Frankfurt/M nach Sydney 310ms.

Die Aufgabe der vorliegenden Erfindung liegt nunmehr darin, ein Verfahren und ein System bereit zu stellen, womit sich jeweils eine signifikante Verringerung der Latenz bei einem Datenaustausch zwischen einem Sender und einem Empfänger erreichen lässt.

Diese Aufgaben werden durch das Verfahren nach Anspruch 1 und das System nach Anspruch 13 sowie die Vorrichtungen nach den Ansprüchen 15 und 16 gelöst. Die jeweiligen Unteransprüche enthalten besonders vorteilhafte Ausführungsformen.

Anspruchsgemäß nutzt die vorliegende Erfindung Neutrinos für den Austausch einer Nachricht respektive eines Codewortes, wobei die Neutrinos auf direktem Wege vom Sender durch die Erde hindurch zu einem Empfänger gelangen. Wegen der Wahl des kürzesten Weges durch die Erde und wegen der Ausbreitung der Neutrinos mit Lichtgeschwindigkeit ist die Latenz bei dieser Übertragung auf ein Minimum reduziert.

Im Hinblick auf die Datenübertragung mit Neutrinos ist zunächst folgendes festzustellen: Protonen-Beschleuniger, die zur Erzeugung von Neutrino-Strahlen eingesetzt werden können, arbeiten derzeit typischerweise mit Wiederholraten von 50Hz. Es sind jedoch Wiederholraten von mehreren 100 Hz realisierbar. Bei einer Wiederholrate von 100 Hz ergäbe sich eine Übertragungsrate von 100 Bit pro Sekunde.

Dabei lässt sich die Übertragungszeit der Neutrinos, die auf direktem Wege mit Lichtgeschwindigkeit durch die Erde gelangen, über die Kugelsehnengleichung bestimmen, so dass sich für die oben genannten Strecken Frankfurt/M - Graz 1,2ms (statt 37ms), Frankfurt/M - New York 19,6ms (statt 100ms), Frankfurt/M - Hongkong 37,3ms (statt 339ms) und Frankfurt/M - Sydney 40,9ms (statt 310ms) ergeben. Ersichtlich lässt sich die Latenz durch die Übertragung einer Nachricht mittels eines Neutrino-Kanals um Faktoren zwischen 2 und 30 verbessern. Entsprechend wären Neutrino-Bits also einen Faktor zwischen 2 und 30 schneller am Ziel als Bits, die über klassische Wege, insbesondere das Internet, versendet werden.

Allerdings schwindet der Vorteil der Neutrino-Übertragung wegen der geringen Bandbreite von etwa 100 Bit pro Sekunde jedoch schnell, sobald größere Datenmengen übertragen werden. Beispielsweise ist die klassische Übertragung auf der Strecke Frankfurt - New York bei der Übertragung einer Datenmenge von nur 6 Bit bereits schneller als der Neutrino-Kanal.

Um die Überlegenheit des Neutrino-Kanals bei einer Datenmenge von 10 Bit zu erhalten, müsste die Wiederholrate des Protonen-Beschleunigers entsprechend erhöht werden. Die errechenbaren Repetitionsraten liegen insbesondere für interkontinentale Strecken bereits im Bereich des technisch Machbaren. Sogar Wiederholraten an Beschleunigern von 300 Hz sind nach heutigem Stand der Technik nicht unrealistisch. Neutrino-basierte Kommunikation bietet somit im Vergleich zu klassischen Übertragungswegen erhebliche Vorteile hinsichtlich der Latenzzeit, insbesondere gerade bei kurzen Nachrichten von wenigen Bit und großen Distanzen.

An dieser Stelle kommt ein weiterer für die Erfindung wesentlicher Gedanke ins Spiel, nämlich die Post Shannon'sche Kommunikationstheorie (PSK). Vorliegend betrachten wir einen Neutrino-Kommunikationskanal von Alice (Sender) zu Bob (Empfänger), über den ein Buchstabe aus einem Alphabet A übertragen wird. Dabei sei der Kanal durch Rauschen beeinträchtigt, was die Zuverlässigkeit der Informationsübertragung einschränkt. Alice verfügt über eine Nachricht oder ein Ereignis x, während Bob die Nachricht y besitzt und am Ende der Kommunikation deterministisch oder statistisch überprüfen möchte, ob x = y gilt.

Im klassischen Ansatz der PSK wird die Nachricht respektive das Codewort durch deterministische PSK kodiert, wobei jedes Codewort eindeutig mit einem möglichen Ereignis verknüpft ist. Dabei wird die Nachricht x in ein Codewort der Länge n kodiert und an Bob gesendet. Bob, der x kennt oder rekonstruiert, kann dann eindeutig prüfen, ob x = y ist. Die Anzahl der Nachrichten, die in diesem Fall übertragen werden können, ist durch die Kanalkapazität C begrenzt. Die maximale Anzahl M an möglichen Nachrichten beträgt M = 2^{nC}. Hierbei ist C die Kanalkapazität, die die beste erreichbare Übertragungsrate für den verrauschten Kanal angibt, und n die Länge des Codeworts. Im deterministischen Fall ist die Kodierung umkehrbar. Es existiert also eine eindeutige Zuordnung zwischen Nachricht und Codewort. Das bedeutet, dass die Anzahl der Nachrichten nicht größer sein kann als die Anzahl der verfügbaren Codewörter.

In vielen Anwendungen ist Bob jedoch nicht daran interessiert, die vollständige Nachricht x zu rekonstruieren, sondern lediglich im Rahmen einer Identifikation festzustellen, ob gilt x = y. Dabei existieren für den Fall der Identifikation mit deterministischer Kodierung optimale Codes. Die maximale Anzahl der kodierbaren Nachrichten ist gegeben durch M = 2^{nlog|A|} = |A|ⁿ, wobei |A| die Anzahl der Symbole des Alphabets und n die Länge der Codewörter ist. Auch in diesem Fall bleibt die Kanalkapazität C als Grenze, da C stets strikt kleiner als log|A| ist, wenn der Kanal relevantes Rauschen aufweist.

Eine wesentliche Verbesserung der Effizienz lässt sich erzielen, wenn statt der deterministischen Kodierung die stochastische Kodierung verwendet wird, bei der die Zuordnung zwischen der Nachricht x und dem Codewort mithilfe einer Zufallsfunktion durchgeführt wird. Die Anzahl der möglichen Nachrichten steigt damit drastisch auf M ~ 2^(2^{nC}). Das bedeutet, dass die stochastische Kodierung exponentiell effizienter ist als die oben beschriebene deterministische Kodierung.

Die stochastische Kodierung basiert vorteilhafterweise auf der Verwendung von vorverteilten Zufallszahlen - auch "Common Randomness" genannt -, die im Vorfeld an alle Kommunikationsknoten verteilt werden und daher sowohl Alice als auch Bob bekannt sind. Zum Beispiel können im Vorfeld L Zufallsbits zwischen Alice und Bob ausgetauscht und dort jeweils lokal gespeichert werden. Mithilfe dieser Zufallsbits kann Alice eine Nachricht x durch eine Hash-Funktion h(x,r) kodieren, wobei r die vorverteilte Zufallszahl ist.

Der für das stochastische PSK-Verfahren notwendige vorverteilte Zufall wird typischerweise über ein klassisches Kommunikationsnetzwerk, beispielsweise das Internet, zwischen den kommunizierenden Endknoten (hier Alice und Bob) räumlich verteilt. Die Zufallszahlen werden lokal gespeichert und stehen den Kodier- und Dekodier-Stationen für die Dauer der Kommunikation zur Verfügung.

Im deterministischen Fall gilt für zwei unterschiedliche Nachrichten x ≠ y: Entweder ist a(x) = a(y) (Kollision tritt immer auf) oder es ist a(x) ≠ a(y) (Kollision tritt nie auf). Die Fehlerwahrscheinlichkeit für eine Kollision ist somit nicht kontrollierbar.

Im stochastischen Fall hingegen ist die Kodierung probabilistisch, so dass die Wahrscheinlichkeit einer Kollision durch geeignete Wahl einer Hash-Funktion kontrolliert werden kann. Dazu kann die stochastische Kodierung eine Hash-Funktion umfassen, die eine Nachricht x und eine Zufallszahl r auf ein Codewort h(x,r) abbildet, das als Nachricht übertragen wird. Für zwei unterschiedliche Nachrichten x ≠ y gilt: Pr(h(x,r) = h(y,r)) ≤ ε wobei ε eine vorgegebene Fehlertoleranz ist.

Die stochastische Kodierung ist nicht umkehrbar, d. h., aus dem Hash-Wert h(x,r) lässt sich x nicht rekonstruieren. Daher können mehr Nachrichten kodiert werden, als es deterministisch möglich wäre. Die Hash-Funktion h(x,r) bildet die Nachricht x und die Zufallszahl r auf ein kompaktes Codewort ab. Das Ergebnis hängt vom Zufallswert r ab, der Alice und Bob bekannt ist. Die stochastische Kodierung kann auch einen linearen Code oder einen Reed Solomon Code umfassen.

In besonderen Ausführungsformen können randomisierte PSK-Codewörter als Realtime-Broadcasting Nachrichten versendet werden und entsprechende Handlungen bei angeschlossenen Netzteilnehmern auslösen.

Im Hinblick auf den Austausch einer PSK-Kodierten Nachricht zwischen einem Sender und einem Empfänger unter Verwendung eines Neutrino-basierten Kommunikationskanals lässt sich somit feststellen, dass sich schon mit der deterministischen PSK bereits Kanalgewinne erzielen lassen, wobei Dekodierfehler nahezu verschwinden. Bei einer Bandbreite von nur 10 Bit können somit 2¹⁰ = 1024 Ja/Nein-Nachrichten zuverlässig übertragen werden. Im Verhältnis dazu ermöglicht die stochastische PSK-Kodierung eine erheblich größere, nämlich eine doppelt exponentielle Effizienz. Das bedeutet, dass bei derselben Bandbreite von 10 Bit eine Datenmenge von bis zu 10 Terabit (10¹⁰ Bit) an Ja/Nein-Nachrichten übertragen werden kann.

Wegen der Nutzung eines Neutrino-Kanals geht die Übertragung von deterministisch oder stochastisch PSK-kodierten Nachrichten über die Kommunikationsstrecke mit einer minimalen Netzwerklatenz einher. Erfindungsgemäß nutzt das Verfahren dazu folgende Schritte:
Senderseitig wird zunächst ein Neutrino-Strahl erzeugt. Das geschieht insbesondere mittels eines auf hohe Energien beschleunigen Protonenstrahls, wobei es nicht ausgeschlossen ist, dass in Zukunft auch ein Strahl anderer hochenergetischer Teilchen für die Erzeugung von Neutrino-Strahlen genutzt werden kann. Der Strahl, in diesem Falle der Protonenstrahl wird auf ein Target gelenkt, wo die Protonen durch Kollisionen kurzlebige Teilchen erzeugen, aus deren Zerfall Neutrinos hervorgehen.

Auf diesen Strahl aus Neutrinos wird ein mittels deterministischer oder stochastischer PSK kodiertes Codewort, mithin eine Nachricht, umfassend eine Anzahl von Codewort-Bits aufgeprägt. Die Amplitudenmodulation des Neutrino-Strahls mit den Bits des Codeworts erfolgt durch die Steuerung der Auslenkung des Protonenstrahls mittels eines steuerbaren Ablenksystems, insbesondere eines Kickermagneten, um entsprechend der Bits den Protonenstrahl innerhalb eines Zeitfensters respektive eines Zeitschlitzes entweder auf das Target oder auf einen Absorber zu lenken. Mit dieser entsprechend der Bits gesteuerten Auslenkung des Protonenstrahls auf das Target werden die Bits des Codewortes als Neutrino-Pulse, mithin als eine Amplitudenmodulation auf einen Neutrino-Strahl, kodiert. Dabei gilt das Ausbleiben eines Neutrino-Pulses in einem Zeitschlitz repräsentiert ein "0"-Bit und das Aussenden eines Neutrino-Pulses in einem Zeitschlitz repräsentiert ein "1 "-Bit oder umgekehrt.

Der solchermaßen erzeugte und das Codewort tragende Strahl aus Neutrino-Pulsen tritt vom Sender durch das Material der Erde hindurch zu einem weit entfernt vom Sender befindlichen Empfänger. Sender und Empfänger können an sich auf dem Erdball gegenüberliegenden Orten befinden.

Um die Neutrino-Pulse auf Seiten des Empfängers zuordnen, respektive richtig "lesen" zu können, bedarf es der Synchronisierung zwischen Sender und Empfänger mittels einer Zeitsynchronisationseinheit, welche die Taktung der erzeugten Neutrino-Pulse mit Zeitfenstern des Empfängersystems synchronisiert.

Der Empfang der Neutrino-Pulse erfolgt durch einen dem Empfänger zugeordneten Neutrino-Detektor, der Zerfallsprodukte, insbesondere Lichtsignale, die bei der Wechselwirkung der Neutrinos mit einem Detektormedium erzeugt werden, detektiert. Dabei können die Neutrino-Pulse über ihre Richtung und das Zeitfenster vom (kosmischen) Untergrund diskriminiert werden. Die empfangene Pulsfolge wird zur Weiterverarbeitung an eine Dekodier Station weitergeleitet, wo die einzelnen Pulse unter Berücksichtigung der zeitlichen Synchronisation jeweils einem Bit des Codewortes zugeordnet werden. Die solchermaßen empfangenen Bits werden dann zur Erzeugung des Codewortes aneinandergereiht und in einem Speichermodul des Empfängers gespeichert.

Dabei nutzt der Dekodierer im Falle der stochastischen PSK den zuvor verteilten Zufall, um einen Vergleich der erwarteten mit einem empfangenen Signal durchzuführen. Sind beide Signale identisch, so liegt eine positive Identifikation vor und weitere Aktivitäten lassen sich starten. Bei der deterministischen PSK wird jeder Nachricht x eindeutig ein Codewort a(x) zugeordnet, wobei die Zuordnung durch eine deterministische (fest definierte) Regel oder Funktion erfolgt. Der Dekodierer muss nicht notwendigerweise am Endpunkt des Neutrino-Kanals lokalisiert sein, denn die PSK-kodierten Codewörter können vor einer Dekodierung über Kern- und Zugangsnetzwerke empfängerseitig weitergeleitet werden.

Das beschriebene Verfahren bietet eine maximale Sicherheit, da das Neutrino-Signal direkt durch die Erde propagiert und konventionelle Abhörmethoden wirkungslos bleiben. Ein Angreifer kann das Neutrino-Signal schlicht nicht abfangen.

Zudem lässt sich das Verfahren mit vergleichsweise geringen Investitionen umsetzen. Die Realisierung des Verfahrens erfordert lediglich die Ergänzung der bestehenden Einrichtungen mit einigen wenigen Komponenten. Derartige Einrichtungen existieren bereits in Japan, den USA und Europa. Durch eine Anpassung der Ausrichtung dieser Anlagen ließe sich problemlos ein Kommunikationskanal zwischen den Kontinenten realisieren. Für die Nutzung eines bereits vorhandenen Neutrino-Kanals als Kommunikationsstrecke braucht lediglich die Modulation der Signale, die senderseitig gesteuert wird, adaptiert werden. Empfängerseitig ist ein PSK (De)kodierer vorzusehen. Beide Seiten brauchen noch ein Speichermodul für die Aufbewahrung der Zufallszahlen. Zudem ist die Integration einer Zeitsynchronisation notwendig, die entsprechend zu justieren wäre, damit sowohl Sender als auch Empfänger dieselbe Taktung einhalten. Die sichere Integration klassischer IT-Komponenten zur Weiterleitung der PSK-kodierten Daten respektive zur Dekodierung am Empfängerknoten ist problemlos mit handelsüblichen Komponenten möglich.

Obwohl die Repetitionsraten der verwendeten Protonenbeschleuniger mit 50 Hz bis 100 Hz vergleichsweise niedrig sind, ermöglicht die Post-Shannon-Kommunikation (insbesondere durch Identifikationscodes) die Übertragung von signifikanten Informationsmengen mit wenigen Bits. Das macht das erfindungsgemäße Verfahren trotz der begrenzten Puls-Rate äußerst effizient und praktikabel.

Für den PSK-Neutrino-Kanal bieten sich verschiedene Anwendungsszenarien.

Ein Anwendungsbeispiel ist der Real-Time-Börsenhandel. Hier eignen sich gerade deterministische PSK-Codes hervorragend zur Beschleunigung von Handelsprozessen an Börsen. Eine einfache Identifikationsnachricht wie etwa "Verkaufe #23" könnte in einem deterministischen PSK-Code effizient kodiert werden, der 1 Bit für die Handelsrichtung (Kauf/Verkauf) und 5 weitere Bits für eine laufende Nummer von 0 bis 31 hat. Entsprechend wären für eine solche Nachricht lediglich 6 Bits erforderlich. Ein Neutrino-Kanal, der mit einer Repetitionsrate von 100 Hz arbeitet, kann eine Nachricht mit 6 Bits in eine Bitfolge der Länge von etwa 60 ms kodieren. Hinzu käme die Transferzeit des Signals über die Strecke Frankfurt - Tokyo (12.742 km) von 42 ms. Die gesamte Übertragungszeit würde somit etwa 100 ms betragen.

Verglichen mit der Übertragung über klassische Netzwerke, die für dieselbe Strecke eine durchschnittliche Latenzzeit auch von etwa 330 ms aufweist, ergibt sich bei einer Repetitionsrate von 100 Hz ein Zeitgewinn von 220 ms.

Hingegen bietet Randomisierte PSK eine leistungsstarke Möglichkeit, Realtime-Broadcasting-Nachrichten zu versenden. Solche Nachrichten können verwendet werden, um Handlungen bei angeschlossenen Netzteilnehmern auszulösen und gezielt zu steuern.

Beispielsweise werden in Zukunft viele Börsenhändler durch digitale Bots ersetzt oder unterstützt werden, die autonom handeln oder menschlichen Brokern assistieren. Der Zeitpunkt, an dem ein solcher digitaler Bot seine Arbeit aufnimmt, kann für den Erfolg eines Geschäfts entscheidend sein. Nun könnten solche Bots mit der Anbindung an ein Niedriglatenznetzwerk, wie es durch randomisierte PSK-Codes und Neutrino-Kanäle realisierbar ist, an unterschiedlichen Standorten weltweit frühzeitig aktiviert werden, um ihre Aktivitäten vor der Konkurrenz auszuführen. Auch böte ein zentralisiertes Steuersystem an einem Börsenstandort die Möglichkeit, unterschiedliche Bots an entfernten Standorten so schnell wie möglich zu aktivieren, um zeitkritische Handelsaktionen durchzuführen.

Die Funktionsweise des Broadcastings mit PSK-Codes würde sich etwa folgendermaßen gestalten: Zunächst werden Steuerbefehle mithilfe von randomisierten PSK-Codes verschlüsselt und über den Broadcasting-Kanal gesendet. Auf der Empfängerseite werden die PSK-kodierten Nachrichten in die lokalen Netzwerke integriert, sodass die angeschlossenen Bots oder Aktoren die übertragenen Nachrichten identifizieren können. Die Bots oder Aktoren prüfen die Broadcast-Nachricht dann auf ihre Relevanz. Wenn eine Nachricht mit "Ja" identifiziert wird, dann wird die entsprechende Handlung ausgeführt. Die Entscheidung basiert somit auf den Identifikationscodes, die zuverlässig und schnell überprüfbar sind. Wenn alle Depot-Bots die Depots von A nach B umschichten sollen, wird eine PSK-kodierte Broadcast-Nachricht an alle Depot-Bots gesendet. Diese identifizieren die Nachricht als relevant und beginnen ihre Arbeit frühzeitig, bevor die Konkurrenz ähnliche Maßnahmen ergreift. Eine zentrale Broadcast-Nachricht könnte auch alle Bots anweisen, einen Neustart durchzuführen. Auch andere gezielte Aktionen sind denkbar: So könnten weitere Steuerbefehle zur Koordinierung von Bot-Teams oder zur synchronisierten Aktivierung neuer Handelsstrategien verwendet werden.

Die Vorteile randomisierter PSK-Codes für Broadcast-Systeme liegen in der hohen Geschwindigkeit. So können einfache Steuerbefehle über einen Neutrino-Kanal mit minimaler Latenzzeit übertragen werden. Zudem lassen sich mittels randomisierter PSK-Codes Fehler vermeiden, so dass die Nachrichten sicher und effizient identifiziert werden können. Da unterschiedliche Bots und Aktoren über denselben Broadcasting-Kanal angesprochen und aktiviert werden können, ist zudem eine hohe Flexibilität gewährleistet.

Durch die erfindungsgemäße Kombination von randomisierten PSK-Codes und dem niedriglatenten Neutrino-Kanal lassen sich komplexe zeitkritische Aufgaben in verteilten Systemen effizient steuern, was in speziellen Bereichen, wie dem Börsenhandel einen erheblichen Wettbewerbsvorteil bietet.

Ein weiteres Szenario, in dem die vorgeschlagene Niedriglatenzverbindung von entscheidendem Vorteil sein könnte, ist die Abwehr von epidemischen Cyberangriffen, wie sie durch sich schnell verbreitende Computerviren oder Würmer verursacht werden. Ein solches Computervirus, das sich über klassische Netzwerke ausbreitet, kann innerhalb kürzester Zeit zahlreiche Computersysteme infiltrieren. Mittels einfacher Codes, die über eine erfindungsgemäße Niedriglatenzverbindung versendet werden, können kritische Netzwerkendpunkte oder Firewalls schneller gesichert werden, als die Nachrichten eines Angreifers ihr Ziel über einen disjunkten erreichen. Dabei könnten intelligente Bots oder KI-Aktoren mittels der Codes automatisch aktiviert werden, um Sicherheitsmaßnahmen zu konfigurieren und Firewalls dynamisch anzupassen.

Die erfindungsgemäße Verbindung mit extrem geringer Verzögerung ermöglicht es, nahezu in Echtzeit auf externe Bedrohungen zu reagieren und infizierte Systeme rechtzeitig zu isolieren oder zu schützen.

Dabei ermöglicht der Einsatz eines Kickermagneten in einer vorteilhaften Ausführungsform des Verfahrens eine präzise und schnelle Steuerung des Protonenstrahls. Der Kickermagnet erzeugt hochfrequente magnetische Pulse, um den Strahl entweder auf das Target oder den Absorber zu lenken. Diese gezielte Ablenkung sorgt für eine eindeutige Zuordnung der Bits zu den Neutrino-Pulsen. Dabei bieten gerade Kickermagneten eine hohe Betriebsgeschwindigkeit und Zuverlässigkeit, wodurch die Effizienz und die Genauigkeit des Nachrichtenaustausches erhöht werden.

Vorteilhafterweise nutzt die Zeitsynchronisationseinheit empfangene Signale eines Satelliten gestützten Navigationssystems, wie GPS, als Referenzzeitquelle, um die Zeitsynchronisation zwischen Sender und Empfänger aufrechtzuerhalten.. Sender und Empfänger können dann mit derselben insbesondere in Zeitschlitze oder Zeitfenster eingeteilten Zeitstruktur arbeiten. Durch die GPS-Synchronisation kann der Empfänger die Zeitfenster exakt auf die Ankunft der Neutrino-Pulse abstimmen. Die Nutzung des globalen GPS-Systems bietet eine zuverlässige und weit verbreitete Methode zur Zeitsynchronisation. Sie minimiert den Aufwand für den Aufbau separater Synchronisationsinfrastrukturen und erhöht die Interoperabilität des Systems.

Auch für die erfindungsgemäße Vorgehensweise ist es vorteilhaft, mittels Szintillations-Detektoren Cherenkovstrahlung zu detektieren, die durch die Wechselwirkung von Neutrinos mit einem Detektormedium erzeugt wird. So registrieren Szintillations-Detektoren die von geladenen Sekundärteilchen erzeugte Cherenkovstrahlung, die entsteht, wenn Neutrinos mit dem Detektormaterial interagieren. Die Strahlung wird durch die Detektoren in elektrische Signale umgewandelt. Szintillations-Detektoren sind hochempfindlich und ermöglichen eine präzise Erkennung der Wechselwirkungen und deren Richtungsabhängigkeit. Somit lassen sich die Signale des Verfahrens von Signalen aus dem kosmischen Untergrund zuverlässig trennen. Sie liefern zuverlässige Daten selbst bei geringen Interaktionsraten, wodurch die Detektionseffizienz maximiert wird.

Um die Neutrino-Strahlen auf der Senderseite zu bündeln und in eine definierte Richtung zu lenken, werden vorteilhafterweise magnetische Fokussierelemente genutzt, mit denen die Pionen-Strahlen auf die gewünschte Flugbahn ausgerichtet werden, bevor sie in Neutrinos zerfallen. Diese Ausrichtung erhöht die Intensität und Effizienz des Neutrino-Strahls und reduziert Streuverluste, was die Signalqualität verbessert.

Wie schon angedeutet, ist es darüber hinaus vorteilhaft, die Synchronisationseinheit auf der Empfängerseite für die Kalibrierung der Detektionszeitfenster einzusetzen, um präzise Zuordnungen der Neutrino-Pulse zu Bits zu bewerkstelligen. Die Synchronisationseinheit stimmt die Detektionszeitfenster präzise auf die Ankunft der Neutrino-Pulse ab, um die Bits exakt zuzuordnen. Diese Kalibrierung zusammen mit der durch die Quelle definierten Richtungsabhängigkeit der Neutrino-Pulse minimiert Fehler und verbessert die Datenintegrität, insbesondere bei variierenden Übertragungsbedingungen.

Neben dem beschriebenen Verfahren umfasst die Erfindung auch ein entsprechendes System zur Durführung des Verfahrens. Auch die senderseitige Vorrichtung zum Erzeugen und Versenden einer PSK kodierten Nachricht in Form von Codewort-Bits unter Verwendung eines Neutrino-basierten Kommunikationskanals und die empfängerseitige Vorrichtung zum Empfangen der PSK kodierten Nachricht über den Neutrino-basierten Kommunikationskanal sind jeweils getrennt Bestandteil der Erfindung.

Dabei umfasst die senderseitige Vorrichtung einen Beschleuniger zur Erzeugung eines hochenergetischen Protonenstrahls, ein steuerbares Ablenksystem, das den Protonenstrahl entsprechend einer Folge von Codewort-Bits entweder auf ein Target zur Erzeugung von Neutrinos durch den Zerfall kurzlebiger Teilchen oder auf einen Absorber lenkt, einen Zufallszahlengenerator, der die Folge von Bits generiert und Steuerbefehle an das Ablenksystem ausgibt und eine Zeitsynchronisationseinheit zur Synchronisierung der erzeugten Neutrino-Pulse mit einem Empfängersystem.

Die empfangsseitige Vorrichtungen umfasst erfindungsgemäß einen Neutrino-Detektor, der Lichtsignale detektiert, die durch Wechselwirkungen von Neutrinos mit einem Detektormedium erzeugt werden, eine Signalanalyseeinheit, die die detektierten Lichtsignale verarbeitet und die Signale jeweils einem Bit des übermittelten Codeworts zuordnet und eine Zeitsynchronisationseinheit, die mit der senderseitigen Zeitsynchronisationseinheit kommuniziert, um die zeitliche Zuordnung der Neutrino-Pulse sicherzustellen.

Beide Seiten werden selbstverständlich noch mit den benötigten IT Komponenten, wie PSK-(De)kodierer, Zufallszahlenspeicher und Steuerungsmodulen ausgestattet.

Die Erfindung wird nachfolgend anhand der Figuren näher beschrieben. Es zeigen:
- **Figur 1**: die elastische Streuung eines Neutrinos an Deuterium,
- **Figur 2**: den senderseitigen Aufbau und
- **Figur 3**: den empfängerseitigen Aufbau.

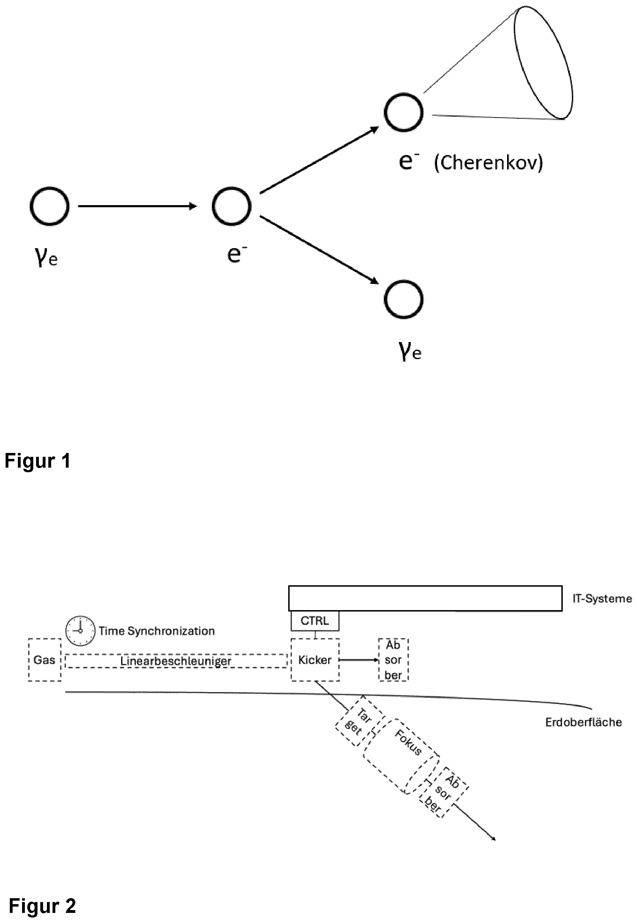

Figur 1 zeigt die elastische Streuung, mit der sich Neutrinos auf Seiten des Detektors nachweisen lassen. Bei der elastischen Streuung interagiert ein Myon-Neutrino (γₑ) direkt mit einem Elektron (e⁻) im Deuterium interagiert. Das Elektron (e⁻) wird gestreut und erzeugt Cherenkov-Strahlung, die sich mit einem Scintillations-Detektor messen lässt. Das Neutrino (γₑ) wird dabei leicht abgelenkt, bleibt jedoch ansonsten unverändert. Diese Reaktion ist sensitiv auf die Richtung des Neutrinos (γₑ), da die Cherenkov-Strahlung die ursprüngliche Flugbahn widerspiegelt. Sie kann auch genutzt werden, um die Energien der Neutrinos zu messen. Im Rahmen der vorliegenden Erfindung wird diese elastische Streuung zur Erzeugung von Neutrinos genutzt.

In Figur 2 ist der senderseitige Aufbau des Systems gezeigt: In einer Quelle wird zunächst ein Gas ionisiert und die entstandenen Protonen durch elektrische Felder in einem Linearbeschleuniger auf hohe Energien beschleunigt. Eine weitere Beschleunigung der Protonen kann mit einem Ringbeschleuniger erfolgen. Der beschleunigte Protonenstrahl bildet die Grundlage für die Neutrino-Erzeugung. Der Beschleuniger ist mit einer Zeitsynchronisationseinheit ("Time Synchronisation") verbunden, die präzise Timing-Informationen liefert, um sicherzustellen, dass die erzeugten Neutrino-Pulse synchron mit den Zeitfenstern respektive Zeitschlitzen des Detektionssystems am Empfänger sind. Die Synchronisation über GPS sorgt dafür, dass Sender und Empfänger präzise aufeinander abgestimmt sind, um die Zuordnung der Codewort-Bits zu gewährleisten.

Aufgrund der niedrigen Repetitionsrate sind die Anforderungen an die Synchronisation zwar nicht hoch, dennoch ist eine Synchronisation für die Zuordnung der Codewort-Bits auf Sender- und Empfängerseite notwendig. Aufgrund der niedrigen Anforderungen lassen sich die Uhren einfach über GPS-Signale oder Ähnliches synchronisieren.

Nach der Beschleunigung wird der Protonenstrahl durch einen Kickermagneten ("Kicker") aus seiner Richtung ausgelenkt. Die Codewort-Bits liefern die Steuerinformationen für die Steuerung (CTRL) den Kickermagneten. Mit einem Bit "1" steuert die Kontrolleinheit ("CTRL") den Kickermagneten, der den aus dem Beschleuniger tretenden Protonenstrahl auf ein Grafit-Target ("Target") lenkt und dabei Pionen erzeugt. Bei einem Bit "0" beeinflusst der Kickermagnet den Protonenstrahl nicht und lenkt ihn dadurch auf einen Absorber ("Absorber"), sodass keine Pionen entstehen. Die Pionen werden durch eine Fokussiereinrichtung ("Fokus") kanalisiert und ausgerichtet, um einen gerichteten und konzentrierten Neutrino-Strahl zu erzeugen. Die Pionen zerfallen dann in Myonen und Myonen Neutrinos (π+ -> µ⁺ + γ_{µ}). Die Myonen werden in einem weiteren Absorber ("Absorber") gebremst, die Neutrinos treten ungehindert durch diesen Absorber hindurch und beginnen ihren Weg durch die Erde ("Erdoberfläche"). Diese steuerbare Ablenkung der hochenergetischen Protonen ermöglicht somit die Kodierung der Codewort-Bits in Zeitschlitze des Neutrino-Strahls durch Amplitudenmodulation. Die solchermaßen entstandenen Neutrino-Pulse propagieren durch die Erde in Richtung eines Empfängers mit entsprechendem Detektor.

Die Codewort-Bits werden gespeichert und können in der IT-Infrastruktur entweder direkt genutzt oder für die Weiterverarbeitung bereitgestellt werden.

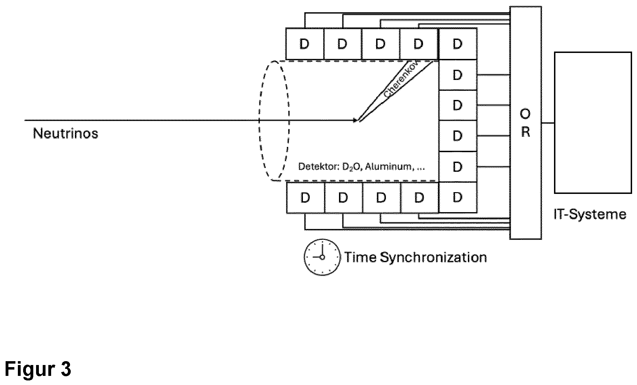

Figur 3 zeigt den empfängerseitigen Aufbau: Die vom Sender ausgehenden gerichteten Neutrino-Pulse treffen auf der anderen Seite der Erde auf eine Detektoreinheit, wobei wenige der Neutrinos mit der Materie im Detektor wechselwirken. Die Detektoreinheit weist eine Vielzahl von Detektormodulen (D) auf, die je nach Design aus Materialien wie Schwerwasser (D₂O), Aluminium oder anderen dichten Stoffen bestehen können. Bei einer Wechselwirkung der Neutrinos mit Deuterium entstehen geladene Teilchen, wie Elektronen oder Myonen, die charakteristische Lichtsignale in Form von Cherenkovstrahlung erzeugen. Diese Cherenkovstrahlung wird in den Detektormodulen (D) registriert und in elektrische Signale umgewandelt. Die Signale der einzelnen Detektormodule werden über ein logisches OR-System ("OR") zusammengeführt. Das bedeutet, dass ein Neutrino-Treffer in einem beliebigen Modul (D) innerhalb eines Zeitschlitzes eine logische "1" kodiert, während das Fehlen eines Signals innerhalb eines Zeitschlitzes einer logischen "0" entspricht. Diese Methode stellt sicher, dass ein einzelnes Detektionsereignis ausreicht, um eine erfolgreiche Bitzuordnung vorzunehmen. Die Verarbeitung der detektierten Neutrino-Pulse zu Codewort-Bits und die Erstellung und Weiterleitung der Codewörter übernimmt eine Systemsteuerung ("IT-Systeme").

Das Detektionssystem ist ebenfalls mit einer Zeitsynchronisationseinheit ("Time Synchronisation") verbunden, die sicherstellt, dass nur Ereignisse innerhalb des erwarteten Zeitfensters der eintreffenden Neutrino-Pulse berücksichtigt werden. Dies minimiert das Risiko von Fehlmessungen durch Hintergrundsignale.

Das beschriebene System ist flexibel und kann mit etablierten Detektoren wie denjenigen aus dem CERN-Gran-Sasso-, IceCube- oder MINOS-Experiment implementiert werden. Dadurch werden die Kosten reduziert und die Realisierung des Verfahrens beschleunigt.

## Patentansprüche

1. Verfahren zum Austausch einer Nachricht zwischen einem Sender und einem Empfänger unter Verwendung eines Neutrino-basierten Kommunikationskanals, umfassend die Schritte:
senderseitiges Kodieren der Nachricht in ein Codewort mittels deterministischer oder stochastischer Post-Shannon-Kodierung (PSK),
senderseitige Erzeugung eines Neutrino-Strahls durch:
- Beschleunigen von Protonen in einem Protonenstrahl,
- Auslenkung des Protonenstrahls auf ein Target zur Erzeugung von Neutrinos durch den Zerfall kurzlebiger Teilchen;
senderseitige Amplitudenmodulation des Neutrino-Strahls durch:
- Steuerung der Auslenkung des Protonenstrahls mittels eines steuerbaren Ablenksystems, um entsprechend der Bits der PSK kodierten Nachricht den Protonenstrahl entweder auf das Target oder auf einen Absorber zu lenken, wodurch die PSK kodierte Nachricht als Neutrino-Pulse kodiert werden, wobei gilt:
o das Ausbleiben eines Neutrino-Pulses in einem Zeitschlitz repräsentiert ein "0"-Bit und
o das Aussenden eines Neutrino-Pulses in einem Zeitschlitz repräsentiert ein "1 "-Bit oder umgekehrt,
Übertragen der Neutrino-Pulse vom Sender zum Empfänger;
Synchronisieren von Sender und Empfänger mittels einer Zeitsynchronisationseinheit, die die Taktung der erzeugten Neutrino-Pulse mit Zeitschlitzen des Empfängersystems synchronisiert;
Empfangen der Neutrino-Pulse durch einen Neutrino-Detektor des Empfängers, wobei:
- Zerfallsprodukte, insbesondere Lichtsignale, die bei der Wechselwirkung der Neutrinos mit einem Detektormedium erzeugt werden, detektiert werden und
- die in entsprechenden Zeitschlitzen detektierten Signale als Bitfolge gespeichert werden;
Dekodieren der empfangenen Bitfolge, wobei ein Vergleich zwischen dem erwarteten und dem empfangenen Codewort durchgeführt wird, um eine Identifikation der Nachricht zu ermöglichen.

2. Verfahren nach Anspruch 1,
**dadurch gekennzeichnet,**
**dass** die Nachricht durch deterministische Post-Shannon-Kodierung (PSK) kodiert wird, wobei jedes Codewort der Nachricht eindeutig mit einem möglichen Ereignis verknüpft ist, wobei die Anzahl der möglichen Nachrichten M = 2^{nC} ist und C der Kanalkapazität und n der Länge des Codeworts entspricht.

3. Verfahren nach Anspruch 2,
**dadurch gekennzeichnet,**
**dass** die Anzahl der auswählbaren Nachrichten durch M=|A|ⁿ bestimmt wird, wobei |A| die Größe des Alphabets und n die Länge des Codeworts ist und wobei die Kanalkapazität C strikt kleiner als log|A| ist.

4. Verfahren nach Anspruch 1,
**dadurch gekennzeichnet,**
**dass** die Nachricht durch stochastische Post-Shannon-Kodierung (PSK) kodiert wird, bei der die Anzahl der auswählbaren Nachrichten durch M = 2^(2^{nC}) bestimmt wird, wobei C die Kanalkapazität und n die Länge des Codeworts ist.

5. Verfahren nach Anspruch 4,
**dadurch gekennzeichnet,**
**dass** die stochastische Post-Shannon-Kodierung auf Zufallszahlen basiert, die im Sinne von "common randomness" dem Sender und dem Empfänger vorliegen.

6. Verfahren nach Anspruch 5,
**dadurch gekennzeichnet,**
**dass** die räumlich vorliegenden Zufallszahlen durch ein klassisches Kommunikationsnetzwerk vorverteilt werden.

7. Verfahren nach einem der Ansprüche 4 bis 6,
**dadurch gekennzeichnet,**
**dass** die stochastische Kodierung eine Hash-Funktion umfasst, die eine Nachricht x und eine Zufallszahl r auf ein Codewort h(x,r) abbildet, das als Nachricht übertragen wird.

8. Verfahren nach Anspruch 7,
**dadurch gekennzeichnet,**
**dass** die Wahrscheinlichkeit, dass h(x,r) = h(y,r) mit x≠y durch eine Fehlertoleranz ε begrenzt ist, wobei die Wahrscheinlichkeit der Kollision zweier Hash-Werte h(x,r) und h(y,r) durch die Wahl des Zufallswerts r bestimmt wird.

9. Verfahren nach einem der Ansprüche 4 bis 8,
**dadurch gekennzeichnet,**
**dass** randomisierte PSK-Codewörter als Realtime-Broadcasting Nachrichten versendet werden und Handlungen bei angeschlossenen Netzteilnehmern auslösen.

10. Verfahren nach einem der vorherigen Ansprüche,
**dadurch gekennzeichnet,**
**dass** im Neutrino-Detektor Cherenkovstrahlung detektiert wird, die durch die Wechselwirkung von Neutrinos mit einem Detektormedium erzeugt wird, wobei die Richtung der Cherenkovstrahlung analysiert wird, um die Richtung der Neutrino-Pulse festzustellen.

11. Verfahren nach einem der vorherigen Ansprüche,
**dadurch gekennzeichnet,**
**dass** die Neutrino-Pulse auf ihrem Weg zwischen Sender und Empfänger die Erde durchdringen.

12. Verfahren nach einem der vorherigen Ansprüche,
**dadurch gekennzeichnet,**
**dass** die erzeugten Pionen vor ihrem Zerfall in Neutrinos durch magnetische Fokussierelemente kanalisiert und ausgerichtet werden.

13. System zum Austausch einer Nachricht zwischen einem Sender und einem Empfänger unter Verwendung eines Neutrino-basierten Kommunikationskanals, umfassend:
eine Kodierungseinheit auf Senderseite, die die Nachricht mittels deterministischer Post-Shannon-Kodierung (PSK) kodiert und als Codewort bereitstellt,
eine Strahlerzeugungseinheit auf Senderseite, die Protonen in einem Protonenstrahl beschleunigt und den Protonenstrahl zur Erzeugung von Neutrinos durch den Zerfall kurzlebiger Teilchen auf ein Target auslenkt, wobei die Auslenkung des Protonenstrahls auf das Target oder auf einen Absorber entsprechend der Bits des Codeworts geschieht, wobei
- das Ausbleiben eines Neutrino-Pulses in einem Zeitschlitz ein "0"-Bit repräsentiert und
- das Aussenden eines Neutrino-Pulses in einem Zeitschlitz ein "1"-Bit repräsentiert, oder umgekehrt,
eine Übertragungseinheit, die die Neutrino-Pulse vom Sender zum Empfänger überträgt,
eine Synchronisationseinheit, die die Zeitsynchronisation zwischen Sender und Empfänger durchführt, sodass die Taktung der erzeugten Neutrino-Pulse mit Zeitfenstern des Empfängersystems übereinstimmt,
einen Neutrino-Detektor auf Empfängerseite, der Neutrinos anhand von Zerfallsprodukten, insbesondere von Lichtsignalen, detektiert, die durch Wechselwirkung der Neutrinos mit einem Detektormedium entstehen, und der die in entsprechenden Zeitschlitzen detektierten Signale als Bitfolge speichert und
eine Dekodierungseinheit auf Empfängerseite, die die empfangene Bitfolge dekodiert, und einen Vergleich zwischen der erwarteten und dem empfangenen Codewort durchführt, um die Nachricht zu identifizieren.

14. System nach Anspruch 13,
**dadurch gekennzeichnet,**
**dass** auf der Senderseite und auf der Empfängerseite im Sinne von "common randomness" jeweils dieselben Zufallszahlen zur stochastischen Post-Shannon-(De)Kodierung vorliegen.

15. Vorrichtung zum Erzeugen und Versenden einer Nachricht unter Verwendung eines Neutrino-basierten Kommunikationskanals, wobei die Nachricht mittels deterministischer Post-Shannon-Kodierung (PSK) kodiert und als Codewort bereitgestellt ist, umfassend:
- einen Protonenbeschleuniger zur Erzeugung eines hochenergetischen Protonenstrahls,
- ein steuerbares Ablenksystem, das den Protonenstrahl entsprechend der Folge von Bits des Codewortes entweder auf ein Target zur Erzeugung von Neutrinos durch den Zerfall kurzlebiger Teilchen oder auf einen Absorber lenkt,
- eine Übertragungseinheit, die die erzeugten Neutrino-Pulse zu einem Empfängersystem überträgt und
- eine Zeitsynchronisationseinheit zur Synchronisierung der erzeugten Neutrino-Pulse mit einem Empfängersystem.

16. Vorrichtung zum Empfangen eines Codeworts über einen Neutrino-basierten Kommunikationskanal umfassend:
- einen Neutrino-Detektor, der Zerfallsprodukte, insbesondere Lichtsignale, detektiert, die bei Wechselwirkungen von Neutrinos mit einem Detektormedium erzeugt werden,
- eine Signalanalyseeinheit, die die detektierten Lichtsignale jeweils einem Bit zuordnet und zu einer Bitfolge speichert,
- eine Zeitsynchronisationseinheit, die mit der senderseitigen Zeitsynchronisationseinheit kommuniziert, um die zeitliche Zuordnung der Neutrino-Pulse sicherzustellen und
- eine Dekodierungseinheit auf Empfängerseite, die die Bitfolge dekodiert, und einen Vergleich zwischen der erwarteten und dem empfangenen Codewort durchführt, um die Nachricht zu identifizieren.

17. Vorrichtungen nach den Ansprüchen 15 und 16,
**dadurch gekennzeichnet,**
**dass** jeder Vorrichtung im Sinne von "common randomness" jeweils dieselben Zufallszahlen zur stochastischen Post-Shannon-(De)Kodierung vorliegen.
